# EUROPEAN PATENT APPLICATION

(11) **EP 4 819 715 A1**
(43) Date of publication of application: **07.10.2026**
(21) Application number: 24902550.3
(22) Date of filing: 26.11.2024
(51) Int. Cl.: H04W 72/044

(54) **COMMUNICATION METHOD AND COMMUNICATION APPARATUS**

(30) Priority: 12.12.2023 CN 202311703424
(71) Applicant: Huawei Technologies Co., Ltd., Shenzhen, Guangdong 518129 (CN)
(72) Inventor: YU, Yang, Shenzhen, Guangdong 518129 (CN); LUO, Jiajin, Shenzhen, Guangdong 518129 (CN); PENG, Xiaohui, Shenzhen, Guangdong 518129 (CN); ZHOU, Baojian, Shenzhen, Guangdong 518129 (CN)
(74) Representative: Maiwald GmbH
(86) International application number: PCT/CN2024/134474
(87) International publication number: WO 2025/124128

(57) **Abstract**

A communication method and a communication apparatus are provided. The method may be applied to the field of communication. The method includes: determining first antenna layout information, where the first antenna layout information includes position coordinates of a plurality of array elements in a one-dimensional antenna array element layout and shape information of a two-dimensional antenna array element layout, and the shape information indicates array element positions in the two-dimensional antenna array element layout; and sending the first antenna layout information. In this method, antenna resources used for sensing can be effectively saved, and over-the-air transmission overheads are reduced.

## Description

This application claims priority to Chinese Patent Application 202311703424.X, filed with the China National Intellectual Property Administration on December 12, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

With the development and advancement of communication technologies, in future cellular networks, a base station will not only be capable of realizing connectivity between humans and things, but also be endowed with a sensing function. An enabling technology that implements coexistence, mutual assistance, and mutual benefit of a communication function and a sensing function is referred to as integrated sensing and communication. Through the integrated sensing and communication, a single base station system integrates a communication function and a sensing function, and communication and sensing share same hardware resources. Antenna resources are used as an example. A massive multiple-input multiple-output (multi-input multi-output, MIMO) array antenna may include up to 32 × 32 array elements. How to allocate antenna resources for communication and sensing will directly impact performance of the integrated sensing and communication.

Currently, antennas in a base station are typically densely arranged at an interval of half of a received signal wavelength λ. However, such an interval is unnecessary for sensing tasks. Therefore, if antenna ports used for sensing are not selected based on specific application scenarios, and a dense antenna array is directly used for sensing, antenna resources are wasted. Furthermore, if sparsely arranged antennas can meet measurement indicators, the costs of resource occupation can be reduced. However, existing solutions of selecting antenna ports for sensing based on application scenarios suffers high over-the-air transmission overheads, which needs to be resolved urgently.

### SUMMARY

This application provides a communication method and a communication apparatus, to effectively save antenna resources used for sensing, and reduce over-the-air transmission overheads.

According to a first aspect, a communication method is provided, where the method is performed by a measurement node. The method includes: determining first antenna layout information, where the first antenna layout information includes position coordinates of a plurality of array elements in a one-dimensional antenna array element layout and shape information of a two-dimensional antenna array element layout, and the shape information indicates array element positions in the two-dimensional antenna array element layout; and sending the first antenna layout information.

Optionally, the measurement node may be a monostatic measurement node, or may be a receiving measurement node in a bistatic measurement node. Further, optionally, the measurement node may be a terminal apparatus or a network apparatus.

Optionally, the two-dimensional antenna array element layout may be determined based on the position coordinates of the plurality of array elements in the one-dimensional antenna array element layout.

In an embodiment of this application, the measurement node may send the first antenna layout information, so that a processing node obtains a sensing result based on the first antenna layout information. In this way, the measurement node does not need to send position coordinates of each array element in the two-dimensional antenna array element layout, so that an amount of data transmitted by the measurement node can be reduced, thereby reducing over-the-air transmission overheads.

With reference to the first aspect, in some implementations of the first aspect, the two-dimensional antenna array element layout includes a plurality of array element arrangements having a same shape. Regions enclosed by the plurality of array element arrangements have a same center point, and a ratio between areas of the regions enclosed by the plurality of array element arrangements is equal to a square of a ratio between the position coordinates of the plurality of array elements.

Each of the plurality of array element arrangements may enclose a specific shape, for example, a rectangle, a square, an ellipse, or a circle.

Optionally, the central point of the regions enclosed by the plurality of array element arrangements may be coordinates of an array element in the one-dimensional antenna array element layout. The array element may be a selected or unselected array element used to send a sensing signal. Further, optionally, coordinates of the central point are coordinates of a central point in the one-dimensional antenna array element layout, and the coordinates of the central point are a coordinate origin.

In this embodiment of this application, the two-dimensional antenna array element layout includes the plurality of array element arrangements having the same shape, and the areas enclosed by the plurality of array element arrangements have a specific proportional relationship with the position coordinates of the plurality of array elements in the one-dimensional antenna array element layout. In this manner, the one-dimensional antenna array element layout can be mapped to the two-dimensional antenna array element layout in a convenient and rapid manner, so that the measurement node determines the first antenna layout information.

With reference to the first aspect, in some implementations of the first aspect, the plurality of array element arrangements are a plurality of rectangular array element arrangements. The shape information includes a first value, a first spacing, and a second spacing. The first value is a side length ratio of a rectangle enclosed by each of the plurality of rectangular array element arrangements. The first spacing is a horizontal array element spacing in each rectangular array element arrangement. The second spacing is a vertical array element spacing in each rectangular array element arrangement.

Optionally, the first value, the first spacing, and the second spacing may be preset.

Optionally, the horizontal array element spacing may be an array element spacing in an x-axis direction in the two-dimensional antenna array element layout, and the vertical array element spacing may be an array element spacing in a y-axis direction in the two-dimensional antenna array element layout.

In this embodiment of this application, when the plurality of array element arrangements are a plurality of rectangular array element arrangements, the first antenna layout information sent by the measurement node may include the position coordinates of the plurality of array elements in the one-dimensional antenna array element layout, the first value, the first spacing, and the second spacing. In this manner, the measurement node does not need to send the position coordinates of each array element in the two-dimensional antenna array element layout, and the processing node can reconstruct the position coordinates of each array element in the second antenna array element layout based on the above parameters in the first antenna layout information. In this way, the amount of data transmitted by the measurement node is relatively small, thereby reducing the over-the-air transmission overheads.

With reference to the first aspect, in some implementations of the first aspect, the plurality of array element arrangements are a plurality of elliptical array element arrangements, and the shape information includes a second value and a third value. The second value is a ratio of a major axis to a minor axis of an ellipse enclosed by each of the plurality of elliptical array element arrangements, and the third value is an angular spacing between array elements in each elliptical array element arrangement relative to the center point.

The angular spacing between array elements in each elliptical array element arrangement relative to the center point being the third value may be understood that each included angle formed by a connecting line between an array element in each elliptical array element arrangement and the center point is the third value.

Optionally, the second value and the third value may be preset.

In this embodiment of this application, when the plurality of array element arrangements are a plurality of elliptical array element arrangements, the first antenna layout information sent by the measurement node may include the position coordinates of the plurality of array elements in the one-dimensional antenna array element layout, the second value, and the third value. In this manner, the processing node can reconstruct the position coordinates of each array element in the second antenna array element layout based on the above parameters in the first antenna layout information. In this way, the amount of data transmitted by the measurement node is relatively small, thereby reducing the over-the-air transmission overheads.

With reference to the first aspect, in some implementations of the first aspect, the method further includes: receiving a first sensing signal based on the two-dimensional antenna array element layout, where the two-dimensional antenna array element layout is determined based on the position coordinates of the plurality of array elements in the one-dimensional antenna array element layout; and sending sensing data based on the first sensing signal.

Optionally, the measurement node may first generate the sensing data based on the first sensing signal, and then send the sensing data.

Alternatively, after generating the sensing data, the measurement node may obtain a sensing result based on the sensing data, and does not need to send the sensing data.

In this embodiment of this application, the measurement node may receive the sensing signal based on the two-dimensional antenna array element layout, and send the sensing data based on the sensing signal, so that the processing node determines the sensing result based on the sensing data. Because the two-dimensional antenna array element layout is determined based on the position coordinates of the plurality of array elements in the one-dimensional array element layout, the measurement node does not need to use a dense antenna array to receive the sensing signal, thereby effectively saving antenna resources used for sensing. In addition, the communication method has relatively good generalization and can be applied to different communication and sensing scenarios.

With reference to the first aspect, in some implementations of the first aspect, before receiving the first sensing signal based on the two-dimensional antenna array element layout, the method further includes: sending a second sensing signal based on the two-dimensional antenna array element layout, where the first sensing signal is an echo signal corresponding to the second sensing signal.

In this embodiment of this application, when the measurement node is a monostatic measurement node, the measurement node may obtain the first sensing signal based on the second sensing signal sent by the measurement node, and send the sensing data based on the first sensing signal. In this way, no additional transmitting measurement node needs to be provided, thereby reducing costs of a communication system.

According to a second aspect, a communication method is provided, where the method is performed by a processing node. The method includes: receiving one or more pieces of first antenna layout information, where the one or more pieces of first antenna layout information include position coordinates of a plurality of array elements in a one-dimensional antenna array element layout and shape information of a two-dimensional antenna array element layout, and the shape information indicates array element positions in the two-dimensional antenna array element layout; and receiving sensing data, and processing the sensing data based on the one or more pieces of first antenna layout information.

Optionally, the processing node may be a terminal apparatus or a network apparatus, and the processing node processes the sensing data based on one or more first antenna layout signals, to obtain a sensing result.

Optionally, the sensing result may include a single result or a plurality of results including ranging, angle measurement, velocity measurement, or frequency measurement (Doppler) imaging.

Optionally, the plurality of pieces of first antenna array element information may come from one or more measurement nodes. For example, two pieces of first antenna layout information may respectively come from two measurement nodes. Further, optionally, one of the two measurement nodes is a transmitting measurement node, and the other is a receiving measurement node.

In an embodiment of this application, the processing node may receive the sensing data, and process the sensing data based on the one or more pieces of first antenna layout information, to obtain the sensing result. In this way, the processing node does not need to obtain position coordinates of each array element in the two-dimensional antenna array element layout from the measurement node, so that an amount of data transmitted by the measurement node can be reduced, thereby reducing over-the-air transmission overheads.

With reference to the second aspect, in some implementations of the second aspect, the two-dimensional antenna array element layout includes a plurality of array element arrangements having a same shape. Regions enclosed by the plurality of array element arrangements have a same center point, and a ratio between areas of the regions enclosed by the plurality of array element arrangements is equal to a square of a ratio between the position coordinates of the plurality of array elements.

In this embodiment of this application, the two-dimensional antenna array element layout includes the plurality of array element arrangements having the same shape, and the areas enclosed by the plurality of array element arrangements have a specific proportional relationship with the position coordinates of the plurality of array elements in the one-dimensional antenna array element layout. In this manner, the one-dimensional antenna array element layout can be mapped to the two-dimensional antenna array element layout in a convenient and rapid manner, so that the processing node determines position coordinates of each array element in the two-dimensional antenna array element layout based on the first antenna layout information, to obtain the sensing result.

With reference to the second aspect, in some implementations of the second aspect, the plurality of array element arrangements are a plurality of rectangular array element arrangements. The shape information includes a first value, a first spacing, and a second spacing. The first value is a side length ratio of a rectangle enclosed by each of the plurality of rectangular array element arrangements. The first spacing is a horizontal array element spacing in each rectangular array element arrangement. The second spacing is a vertical array element spacing in each rectangular array element arrangement.

In this embodiment of this application, when the plurality of array element arrangements are a plurality of rectangular array element arrangements, the first antenna layout information received by the processing node may include the position coordinates of the plurality of array elements in the one-dimensional antenna array element layout, the first value, the first spacing, and the second spacing. In this manner, the processing node does not need to receive the position coordinates of each array element in the two-dimensional antenna array element layout, and the processing node can reconstruct the position coordinates of each array element in the second antenna array element layout based on the above parameters in the first antenna layout information. In this way, the amount of data transmitted by the measurement node is relatively small, thereby reducing the over-the-air transmission overheads.

With reference to the second aspect, in some implementations of the second aspect, the plurality of array element arrangements are a plurality of elliptical array element arrangements, and the shape information includes a second value and a third value. The second value is a ratio of a major axis to a minor axis of an ellipse enclosed by each of the plurality of elliptical array element arrangements, and the third value is an angular spacing between array elements in each elliptical array element arrangement relative to the center point.

In this embodiment of this application, when the plurality of array element arrangements are a plurality of elliptical array element arrangements, the first antenna layout information received by the processing node may include the position coordinates of the plurality of array elements in the one-dimensional antenna array element layout, the second value, and the third value. In this manner, the processing node can reconstruct the position coordinates of each array element in the second antenna array element layout based on the above parameters in the first antenna layout information. In this way, the amount of data transmitted by the measurement node is relatively small, thereby reducing the over-the-air transmission overheads.

According to a third aspect, a communication system is provided, where the communication system includes a receiving measurement node, a transmitting measurement node, and a processing node. The receiving measurement node is configured to send first antenna layout information and sensing data to the processing node. The sensing data is obtained by the receiving measurement node based on a second sensing signal sent by the transmitting measurement node. The first antenna layout information includes first position coordinate information and first shape information. The first position coordinate information indicates position coordinates of a plurality of array elements in a one-dimensional antenna array element layout, and the first shape information indicates array element positions in a two-dimensional antenna array element layout. The transmitting measurement node is configured to send second antenna layout information to the processing node. The second antenna layout information includes second position coordinate information and second shape information. The second position coordinate information indicates position coordinates of a plurality of array elements in a one-dimensional antenna array element layout, and the second shape information indicates array element positions in a two-dimensional antenna array element layout. The processing node is configured to process the sensing data based on the first antenna layout information and the second antenna layout information.

Optionally, the plurality of position coordinates in the one-dimensional antenna array element layout in the first position coordinate information may be the same as or different from the plurality of position coordinates in the one-dimensional antenna array element layout in the second position coordinate information. Similarly, the array element positions in the two-dimensional antenna layout indicated by the first shape information may be the same as or different from the array element positions in the two-dimensional antenna layout indicated by the second shape information.

In an embodiment of this application, when the measurement node is a bistatic measurement node, the processing node may process the sensing data based on the first antenna layout information sent by the receiving measurement node and the second antenna layout information sent by the transmitting measurement node to obtain a sensing result. In this manner, the amount of data transmitted by the receiving measurement node and the transmitting measurement node can be reduced, thereby reducing the over-the-air transmission overheads.

With reference to the third aspect, in some implementations of the third aspect, the two-dimensional antenna array element layout includes a plurality of array element arrangements having a same shape. Regions enclosed by the plurality of array element arrangements have a same center point, and a ratio between areas of the regions enclosed by the plurality of array element arrangements is equal to a square of a ratio between the position coordinates of the plurality of array elements.

In this embodiment of this application, the two-dimensional antenna array element layout includes the plurality of array element arrangements having the same shape, and the areas enclosed by the plurality of array element arrangements have a specific proportional relationship with the position coordinates of the plurality of array elements in the one-dimensional antenna array element layout. In this manner, the one-dimensional antenna array element layout can be mapped to the two-dimensional antenna array element layout in a convenient and rapid manner, so that the processing node determines position coordinates of each array element in the two-dimensional antenna array element layout based on the first antenna layout information, to obtain the sensing result.

With reference to the third aspect, in some implementations of the third aspect, the plurality of array element arrangements are a plurality of rectangular array element arrangements. The first shape information includes a first value, a first spacing, and a second spacing. The first value is a side length ratio of a rectangle enclosed by each of the plurality of rectangular array element arrangements. The first spacing is a horizontal array element spacing in each rectangular array element arrangement. The second spacing is a vertical array element spacing in each rectangular array element arrangement.

In this embodiment of this application, when the plurality of array element arrangements are a plurality of rectangular array element arrangements, the first antenna layout information received by the processing node may include the position coordinates of the plurality of array elements in the one-dimensional antenna array element layout, the first value, the first spacing, and the second spacing. In this manner, the processing node does not need to receive the position coordinates of each array element in the two-dimensional antenna array element layout, and the processing node can reconstruct the position coordinates of each array element in the second antenna array element layout based on the above parameters in the first antenna layout information. In this way, the amount of data transmitted by the measurement node is relatively small, thereby reducing the over-the-air transmission overheads.

With reference to the third aspect, in some implementations of the third aspect, the plurality of array element arrangements are a plurality of elliptical array element arrangements, and the first shape information includes a second value and a third value. The second value is a ratio of a major axis to a minor axis of an ellipse enclosed by each of the plurality of elliptical array element arrangements, and the third value is an angular spacing between array elements in each elliptical array element arrangement relative to the center point.

In this embodiment of this application, when the plurality of array element arrangements are a plurality of elliptical array element arrangements, the first antenna layout information received by the processing node may include the position coordinates of the plurality of array elements in the one-dimensional antenna array element layout, the second value, and the third value. In this manner, the processing node can reconstruct the position coordinates of each array element in the second antenna array element layout based on the above parameters in the first antenna layout information. In this way, the amount of data transmitted by the measurement node is relatively small, thereby reducing the over-the-air transmission overheads.

With reference to the third aspect, in some implementations of the third aspect, the transmitting measurement node is further configured to send the second sensing signal based on the two-dimensional antenna array element layout. The receiving measurement node is further configured to receive a first sensing signal based on the two-dimensional antenna array element layout, where the first sensing signal is an echo signal corresponding to the second sensing signal. The receiving measurement node is further configured to determine the sensing data based on the first sensing signal.

In this embodiment of this application, the transmitting measurement node may send the second sensing signal based on the two-dimensional antenna array element layout, and the receiving measurement node may receive the first sensing signal based on the two-dimensional antenna array element layout and determine the sensing data. In this manner, the receiving measurement node and the transmitting measurement node do not need to use a dense antenna array for sensing and interaction, thereby effectively saving antenna resources used for sensing.

According to a fourth aspect, a communication apparatus is provided, where the apparatus includes a processing unit and a sending unit. The processing unit is configured to determine first antenna layout information, and the first antenna layout information includes position coordinates of a plurality of array elements in a one-dimensional antenna array element layout and shape information of a two-dimensional antenna array element layout. The shape information indicates array element positions in the two-dimensional antenna array element layout. The sending unit is configured to send the first antenna layout information.

With reference to the fourth aspect, in some implementations of the fourth aspect, the two-dimensional antenna array element layout includes a plurality of array element arrangements having a same shape. Regions enclosed by the plurality of array element arrangements have a same center point, and a ratio between areas of the regions enclosed by the plurality of array element arrangements is equal to a square of a ratio between the position coordinates of the plurality of array elements.

With reference to the fourth aspect, in some implementations of the fourth aspect, the plurality of array element arrangements are a plurality of rectangular array element arrangements. The shape information includes a first value, a first spacing, and a second spacing. The first value is a side length ratio of a rectangle enclosed by each of the plurality of rectangular array element arrangements. The first spacing is a horizontal array element spacing in each rectangular array element arrangement. The second spacing is a vertical array element spacing in each rectangular array element arrangement.

With reference to the fourth aspect, in some implementations of the fourth aspect, the plurality of array element arrangements are a plurality of elliptical array element arrangements, and the shape information includes a second value and a third value. The second value is a ratio of a major axis to a minor axis of an ellipse enclosed by each of the plurality of elliptical array element arrangements, and the third value is an angular spacing between array elements in each elliptical array element arrangement relative to the center point.

With reference to the fourth aspect, in some implementations of the fourth aspect, the apparatus further includes a receiving unit. The receiving unit is configured to receive a first sensing signal based on the two-dimensional antenna array element layout. The two-dimensional antenna array element layout is determined based on the position coordinates of the plurality of array elements in the one-dimensional antenna array element layout. The sending unit is further configured to send sensing data based on the first sensing signal.

With reference to the fourth aspect, in some implementations of the fourth aspect, the sending unit is further configured to send a second sensing signal based on the two-dimensional antenna array element layout, where the first sensing signal is an echo signal corresponding to the second sensing signal.

According to a fifth aspect, a communication apparatus is provided, where the apparatus includes a receiving unit and a processing unit. The receiving unit is configured to receive one or more pieces of first antenna layout information. The one or more pieces of first antenna layout information include position coordinates of a plurality of array elements in a one-dimensional antenna array element layout and shape information of a two-dimensional antenna array element layout. The shape information indicates array element positions in the two-dimensional antenna array element layout. The processing unit is configured to receive sensing data, and process the sensing data based on the one or more pieces of first antenna layout information.

With reference to the fifth aspect, in some implementations of the fifth aspect, the two-dimensional antenna array element layout includes a plurality of array element arrangements having a same shape. Regions enclosed by the plurality of array element arrangements have a same center point, and a ratio between areas of the regions enclosed by the plurality of array element arrangements is equal to a square of a ratio between the position coordinates of the plurality of array elements.

With reference to the fifth aspect, in some implementations of the fifth aspect, the plurality of array element arrangements are a plurality of rectangular array element arrangements. The shape information includes a first value, a first spacing, and a second spacing. The first value is a side length ratio of a rectangle enclosed by each of the plurality of rectangular array element arrangements. The first spacing is a horizontal array element spacing in each rectangular array element arrangement. The second spacing is a vertical array element spacing in each rectangular array element arrangement.

With reference to the fifth aspect, in some implementations of the fifth aspect, the plurality of array element arrangements are a plurality of elliptical array element arrangements, and the shape information includes a second value and a third value. The second value is a ratio of a major axis to a minor axis of an ellipse enclosed by each of the plurality of elliptical array element arrangements, and the third value is an angular spacing between array elements in each elliptical array element arrangement relative to the center point.

According to a sixth aspect, a communication apparatus is provided, including at least one processor. The at least one processor is configured to enable the apparatus to implement the method according to any one of the implementations of the first aspect or the second aspect.

With reference to the sixth aspect, in some implementations of the sixth aspect, the apparatus further includes a memory. The at least one processor is coupled to the memory, and is configured to read and execute instructions in the memory, so that the apparatus implements the method according to any one of the implementations of the first aspect or the second aspect.

With reference to the sixth aspect, in some implementations of the sixth aspect, the apparatus further includes a communication interface. The at least one processor is coupled to the communication interface, and is configured to control communication between the communication interface and another device.

With reference to the sixth aspect, in some implementations of the sixth aspect, the communication interface is a transceiver or an input/output interface.

According to a seventh aspect, a chip is provided. The chip includes a circuit, and the circuit is configured to perform the method according to any one of the implementations of the first aspect or the second aspect.

With reference to the seventh aspect, in some implementations of the seventh aspect, the circuit is a processing circuit or a logic circuit.

With reference to the seventh aspect, in some implementations of the seventh aspect, the chip further includes an input/output interface. The circuit is configured to control the input/output interface to implement communication with another device.

According to an eighth aspect, a computer-readable storage medium is provided. The computer-readable storage medium stores program code. When the computer program code is run on a computer, the computer is enabled to perform the method according to any one of the implementations of the first aspect or the second aspect.

According to a ninth aspect, a computer program product is provided. The computer product includes a computer program. When the computer program is run, a computer is enabled to perform the method according to any one of the implementations of the first aspect or the second aspect.

### BRIEF DESCRIPTION OF DRAWINGS

FIG. 1 is a diagram of an arrangement of antenna array elements in an antenna panel according to an embodiment of this application;
FIG. 2 is a diagram of a sensing scenario according to an embodiment of this application;
FIG. 3 is a diagram of a sparse antenna array element layout obtained based on a sensing scenario according to an embodiment of this application;
FIG. 4 is a diagram of a scenario to which a communication method is applicable according to an embodiment of this application;
FIG. 5 is a diagram of another scenario to which a communication method is applicable according to an embodiment of this application;
FIG. 6 is a communication method according to an embodiment of this application;
FIGS. 7A-7C are diagrams of a two-dimensional sparse antenna array element layout obtained by using a rectangular mapping rule according to an embodiment of this application;
FIG. 8A and FIG. 8B are diagrams of a two-dimensional sparse antenna array element layout obtained by using an elliptical mapping rule according to an embodiment of this application;
FIG. 9 is another communication method according to an embodiment of this application;
FIG. 10 is a diagram of a simulation scenario according to an embodiment of this application;
FIG. 11A and FIG. 11B are diagrams of comparison between sensing results obtained by using a dense antenna layout and a sparse antenna layout according to an embodiment of this application;
FIG. 12 is another communication method according to an embodiment of this application;
FIG. 13 is a diagram of a communication apparatus according to an embodiment of this application; and
FIG. 14 is a diagram of another communication apparatus according to an embodiment of this application.

### DESCRIPTION OF EMBODIMENTS

The following describes technical solutions of this application with reference to accompanying drawings.

In the descriptions of embodiments of this application, unless otherwise specified, "/" means "or". For example, A/B may represent A or B. In this specification, "and/or" describes only an association relationship between associated objects and represents that three relationships may exist. For example, A and/or B may represent the following three cases: Only A exists, both A and B exist, and only B exists. In this application, "at least one" means one or more, and "a plurality of" means two or more. "At least one of the following items (pieces)" or a similar expression thereof indicates any combination of the items, including one of the items (pieces) or any combination of a plurality of the items (pieces). For example, at least one item (piece) of a, b, or c may indicate: a, b, c, a and b, a and c, b and c, or a, b, and c, where a, b, and c may be singular or plural.

Prefix words "first", "second", and the like in embodiments of this application are merely intended to distinguish between different objects, and impose no limitation on locations, sequences, priorities, quantities, content, or the like of the described objects. Use of prefix words such as ordinal numbers used to distinguish the described objects in embodiments of this application does not constitute a limitation on the described objects. For descriptions of the described objects, refer to the context description in claims or embodiments, and the use of such prefix words should not constitute a redundant limitation.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, new radio (new radio, NR), or a future 6th generation (6th generation, 6G) system.

A user equipment (user equipment, UE) in embodiments of this application may be referred to as user terminal, an access terminal, a subscriber unit, a subscriber station, a mobile station, a remote station, a remote terminal, a mobile device, a user terminal, a terminal, a wireless communication device, a user agent, or a user apparatus. The terminal apparatus may alternatively be a cellular phone, a cordless phone, a session initiation protocol (Session Initiation Protocol, SIP) phone, a wireless local loop (wireless local loop, WLL) station, a personal digital assistant (personal digital assistant, PDA), a handheld device with a wireless communication function, a computing device, another processing device connected to a wireless modem, an in-vehicle device, a wearable device, a terminal apparatus in a 5G network, a terminal apparatus in a future 6G network, a terminal apparatus in a future evolved public land mobile network (public land mobile network, PLMN), or the like. This is not limited in embodiments of this application.

A network apparatus in embodiments of this application may be a device configured to communicate with the terminal apparatus. The network apparatus may be an apparatus that provides a wireless communication function for the terminal apparatus in a radio access network (radio access network, RAN), and is referred to as a RAN device. For example, the network apparatus may be a base station (base station, BS), an evolved NodeB (evolved NodeB, eNodeB), a transmission reception point (transmission reception point, TRP), a next generation NodeB (next generation NodeB, gNB) in a 5G mobile communication system, a next generation NodeB in a 6th generation (6th generation, 6G) mobile communication system, a base station in a future mobile communication system, or an access node in a Wi-Fi system, or may be a module or a unit completing some functions of a base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete a function of a part or all of physical layers. For specific descriptions of the foregoing protocol layers, refer to technical specifications related to the 3rd generation partnership project (3rd generation partnership project, 3GPP). The network apparatus may be a macro base station, or may be a micro base station or an indoor station, or may be a relay node, a donor node, or the like. A specific technology and a specific device form used by the network apparatus are not limited in embodiments of this application.

In another possible scenario, a plurality of RAN nodes collaborate to assist the terminal in implementing radio access, and different RAN nodes respectively implement some functions of the base station. For example, the RAN node may be a CU, a DU, a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an open radio access network (open radio access network, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

In embodiments of this application, a function of the network apparatus may alternatively be performed by a module (for example, a chip) in the network apparatus, or may be performed by a control subsystem including the function of the network apparatus. The control subsystem including the function of the network apparatus may be a control center in the foregoing application scenarios such as smart grid, industrial control, intelligent transportation, and a smart city. The function of the terminal apparatus may alternatively be performed by a module (for example, a chip or a modem) in the terminal apparatus, or may be performed by an apparatus including the function of the terminal apparatus.

For ease of understanding of embodiments of this application, concepts and technologies used in embodiments of this application are first briefly described.
(1) Sensing, also referred to as radio sensing, means that electromagnetic energy is sent to space, and information about an object can be calculated by receiving an electromagnetic wave reflected by the object in the space. For example, parameters such as position, direction, height, speed, size, and movement path can be calculated, and internal and external shapes and structures of the object can be detected. Transmission, echoes, reflection, and scattering of radio waves are explored, to sense and better understand a physical world. As one of the electromagnetic wave sensing technologies, radio sensing technology, due to penetrability and safety of the radio sensing technology, can serve as an important alternative technology for aspects such as security inspection, hidden object detection, environment reconstruction, and monitoring.

The following describes technical problems to be resolved in this application and technical solutions used in this application.

With the development and advancement of communication technologies, in future cellular networks, a base station will not only be capable of realizing connectivity between humans and things, but also be endowed with a sensing function. An enabling technology that implements coexistence, mutual assistance, and mutual benefit of a communication function and a sensing function is referred to as integrated sensing and communication. Through the integrated sensing and communication, a single base station system integrates a communication function and a sensing function, and communication and sensing will share same hardware resources. Antenna resources are used as an example. A MIMO array antenna may include up to 32 × 32 array elements. How to allocate antenna resources used for communication and sensing will directly impact performance of the integrated sensing and communication.

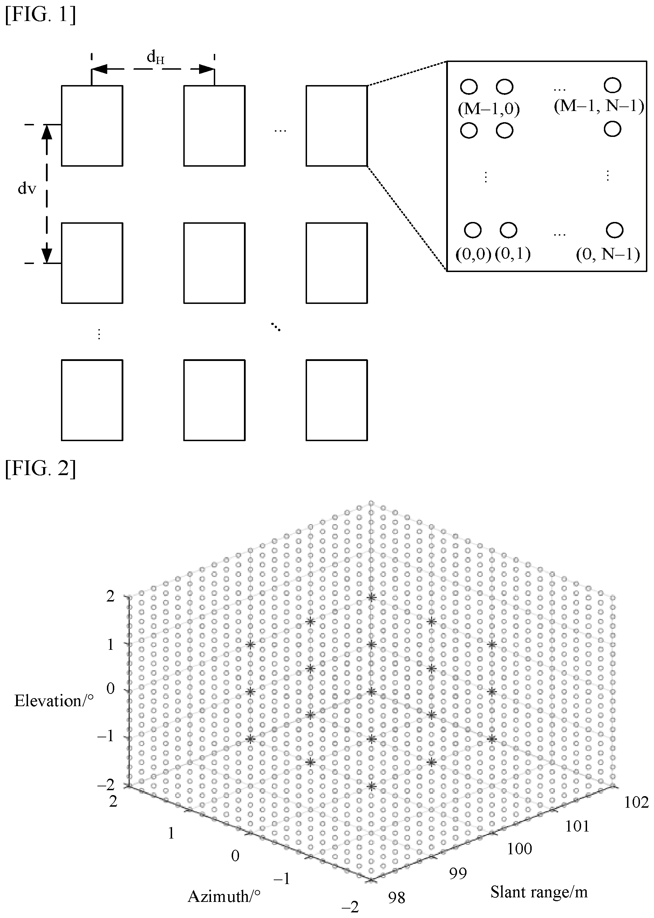

Currently, as shown in FIG. 1, antenna array elements in a base station are typically densely arranged at an interval of half of a received signal wavelength λ. However, such an interval is unnecessary for sensing tasks. In other words, the antenna array elements may alternatively be sparsely arranged based on features and ranges of observation regions. Therefore, if antenna ports used for sensing are not selected based on specific application scenarios, and dense antenna arrays are used for sensing, antenna resources are wasted. Furthermore, if sparsely arranged antennas can meet measurement indicators, the costs of resource occupation can be further reduced.

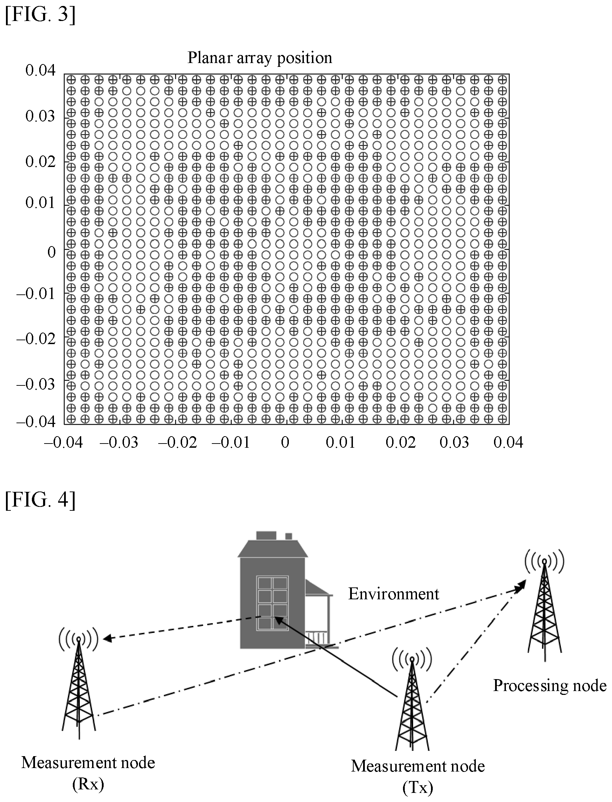

Currently, there are many optimization algorithms for an arrangement of sparse antennas. For example, algorithms such as genetic algorithm, simulated annealing algorithm, and particle swarm algorithm can be used to obtain a sparse antenna array element layout. FIG. 2 shows a method for optimizing a two-dimensional antenna array element layout based on an application scenario. In FIG. 2, a hollow circle may represent a grid position, and a solid dot may represent a target to be sensed. A measurement node may obtain a two-dimensional sparse antenna array element layout as shown in FIG. 3 based on the scenario in FIG. 2, and measure the target to be sensed based on the two-dimensional sparse antenna array element layout. In FIG. 3, a hollow circle may represent an unselected array element used for transmitting a sensing signal, and a circle with a cross mark may represent a selected array element used for transmitting a sensing signal. However, this solution of selecting an antenna port for sensing based on an application scenario suffers from a problem of high overheads of transmission, and the problem needs to be resolved urgently. For example, the measurement node needs to obtain, based on a scenario in real time, position coordinates of each array element in the two-dimensional sparse antenna array element layout and transmit the position coordinates. A processing node needs to receive the position coordinates of each array element and perform sensing calculation. Such a processing method leads to high over-the-air transmission overheads.

Embodiments of this application provide a communication method and a communication apparatus, to effectively save antenna resources used for sensing, and reduce the over-the-air transmission overheads.

FIG. 4 is a diagram of a scenario to which a communication method is applicable according to an embodiment of this application.

As shown in FIG. 4, the application scenario may be a scenario of sensing an environment target (for example, a building, a vehicle, or a truck) based on a bistatic measurement node. In this application scenario, a processing node and two measurement nodes (including a transmitting (transmit, Tx) measurement node and a receiving (receive, Rx) measurement node) may be included. The measurement node and the processing node may be a terminal apparatus or a network apparatus.

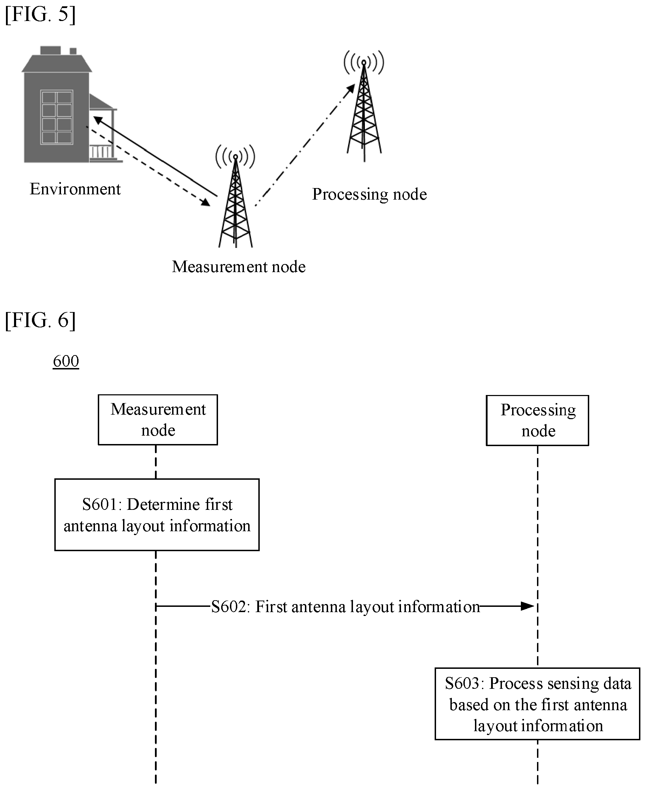

FIG. 5 is a diagram of another scenario to which a communication method is applicable according to an embodiment of this application.

As shown in FIG. 5, the application scenario may be a scenario of sensing an environment target (for example, a building, a vehicle, or a truck) based on a monostatic measurement node. In this application scenario, a measurement node and a processing node may be included. The measurement node and the processing node may be a terminal apparatus or a network apparatus.

FIG. 6 is a communication method according to an embodiment of this application. A method 600 may be applied to the application scenario in FIG. 4 or FIG. 5. The method 600 may include steps S601 to S603.

S601: A measurement node determines first antenna layout information.

The first antenna layout information includes position coordinates of a plurality of array elements in a one-dimensional antenna array element layout and shape information of a two-dimensional antenna array element layout, and the shape information indicates array element positions in the two-dimensional antenna array element layout.

Optionally, the measurement node may be a monostatic measurement node, or may be a receiving measurement node in a bistatic measurement node. Further, optionally, the measurement node may be a terminal apparatus or a network apparatus.

The two-dimensional antenna array element layout may be determined based on the position coordinates of the plurality of array elements in the one-dimensional antenna array element layout.

In an embodiment, the two-dimensional antenna array element layout includes a plurality of array element arrangements having a same shape. Regions enclosed by the plurality of array element arrangements have a same center point, and a ratio between areas of the regions enclosed by the plurality of array element arrangements is equal to a square of a ratio between the position coordinates of the plurality of array elements. In this way, the measurement node can map the one-dimensional antenna array element layout to the two-dimensional antenna array element layout in a convenient and rapid manner, so that the measurement node determines the first antenna layout information.

Optionally, each of the plurality of array element arrangements may enclose a specific shape, for example, a rectangle, a square, an ellipse, or a circle.

Optionally, the central point of the regions enclosed by the plurality of array element arrangements may be coordinates of an array element in the one-dimensional antenna array element layout. The array element may be a selected or unselected array element used to send a sensing signal. Further, optionally, coordinates of the central point are coordinates of a central point in the one-dimensional antenna array element layout, and the coordinates of the central point are a coordinate origin.

In an embodiment, the plurality of array element arrangements are a plurality of rectangular array element arrangements. The shape information includes a first value, a first spacing, and a second spacing. The first value is a side length ratio of a rectangle enclosed by each of the plurality of rectangular array element arrangements. The first spacing is a horizontal array element spacing in each rectangular array element arrangement. The second spacing is a vertical array element spacing in each rectangular array element arrangement.

Optionally, the first value, the first spacing, and the second spacing may be preset.

Optionally, the horizontal array element spacing may be an array element spacing in an x-axis direction in the two-dimensional antenna array element layout, and the vertical array element spacing may be an array element spacing in a y-axis direction in the two-dimensional antenna array element layout.

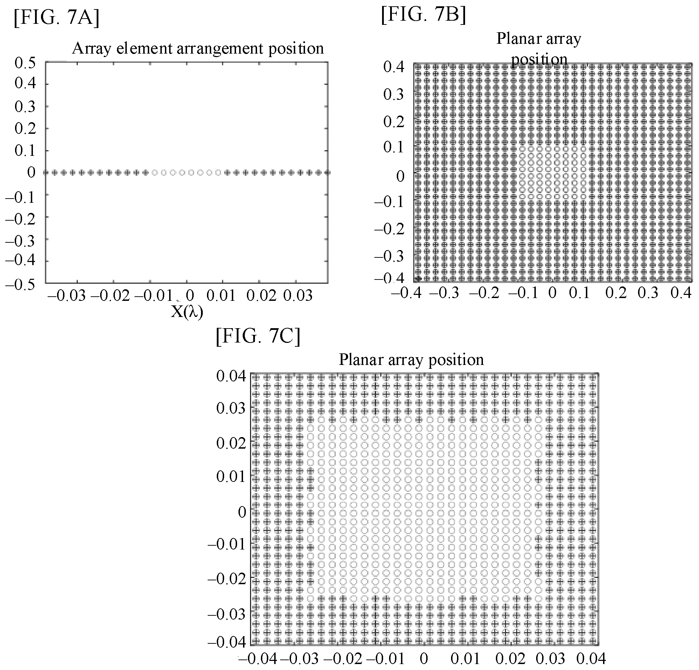

For example, based on an application scenario and a requirement for array element sparsity, the measurement node may first obtain a position coordinate vector Pₓ of a plurality of array elements in a one-dimensional antenna array element layout shown in FIG. 7A. A plurality of rectangular array element arrangements shown in FIG. 7B can be obtained by uniformly translating the plurality of array elements with a center of Pₓ (an origin in the one-dimensional antenna array element layout) as a center point. In each array element arrangement, spacings between array elements in an x-direction and a y-direction are respectively Δ*ₓ*, Δ*_{y}*, and a side length ratio of each rectangular array element is k. In other words, the first antenna array element layout information includes: Pₓ, Δ*ₓ*, Δ*_{y}* and k. For an i-th array element whose position coordinates in the one-dimensional antenna array element layout are Pₓ(i), a rectangular array element arrangement with side lengths of Pₓ(i) and k Pₓ(i) may be obtained after translation. In other words, a ratio of areas of regions enclosed by the plurality of rectangular array element arrangements is equal to a square of a ratio between the position coordinates of the plurality of array elements in the one-dimensional antenna array element layout.

Optionally, after the plurality of rectangular array element arrangements shown in FIG. 7B are obtained, conformal scaling processing may be performed on the plurality of rectangular array element arrangements to finally obtain a two-dimensional antenna array element layout shown in FIG. 7C. The conformal scaling can change sparsity (increase or decrease a quantity of selected array elements) of the plurality of rectangular array element arrangements, so that the two-dimensional antenna array element layout meets a requirement of actual application. In this case, in addition to Δ*ₓ*, Δ*_{y}*, k, and Pₓ, the first antenna array element layout information may further include a sparsity parameter S after conformal scaling.

In an embodiment, the plurality of array element arrangements are a plurality of elliptical array element arrangements, and the shape information includes a second value and a third value. The second value is a ratio of a major axis to a minor axis of an ellipse enclosed by each of the plurality of elliptical array element arrangements, and the third value is an angular spacing between array elements in each elliptical array element arrangement relative to the center point.

The angular spacing between array elements in each elliptical array element arrangement relative to the center point being the third value may be understood that each included angle formed by a connecting line between an array element in each elliptical array element arrangement and the center point is the third value.

Optionally, the second value and the third value may be preset.

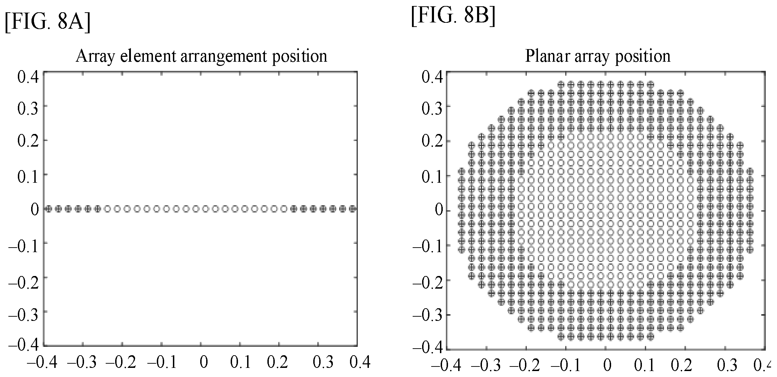

For example, based on the application scenario and the requirement for array element sparsity, the measurement node may first obtain a position coordinate vector Pₓ of a plurality of array elements in a one-dimensional antenna array element layout shown in FIG. 8A. A plurality of elliptical array element arrangements may be obtained by scanning (with a scanning spacing of Δ*_{θ}*) the plurality of array elements with a center of Pₓ (an origin in the one-dimensional antenna array element layout) as a center point. Eccentricity of an ellipse enclosed by each of the plurality of elliptical array element arrangements may be e. For an i-th array element whose position coordinates in the one-dimensional antenna array element layout are Pₓ(i), an elliptical array element arrangement with a major axis of Pₓ(i) and a minor axis of $\sqrt{1 - {e}^{2}} {P}_{x} \left(i\right)$ may be obtained after scanning, and an angular spacing between array elements in the elliptical array element arrangement is Δ*_{θ}*. In other words, a ratio of areas of regions enclosed by the plurality of elliptical array element arrangements is equal to a square of a ratio between the position coordinates of the plurality of array elements in the one-dimensional antenna array element layout. In this case, the first antenna array element layout information includes Pₓ, $\sqrt{1 - {e}^{2}}$, and Δ*_{θ}*.

Optionally, after the plurality of elliptical array element arrangements are obtained, conformal scaling processing may be performed on the plurality of elliptical array element arrangements to finally obtain a two-dimensional antenna array element layout shown in FIG. 8B. The conformal scaling can change sparsity (increase or decrease a quantity of selected array elements) of the plurality of elliptical array element arrangements, so that the two-dimensional antenna array element layout meets a requirement of actual application. In this case, in addition to Δ*ₓ*, Δ*_{y}*, k, and Pₓ, the first antenna array element layout information may further include a sparsity parameter S after conformal scaling.

In an embodiment, before step S601, the measurement node may receive a first sensing signal based on the two-dimensional antenna array element layout, where the two-dimensional antenna array element layout is determined based on the position coordinates of the plurality of array elements in the one-dimensional antenna array element layout; and send sensing data to the processing node based on the first sensing signal. In this way, the measurement node does not need to use a dense antenna array to receive the first sensing signal, thereby effectively saving antenna resources used for sensing.

Optionally, the measurement node may first generate the sensing data based on the first sensing signal, and then send the sensing data.

Alternatively, after generating the sensing data, the measurement node may obtain a sensing result based on the sensing data, and does not need to send the sensing data.

In an embodiment, before the measurement node receives the first sensing signal based on the two-dimensional antenna array element layout, the measurement node may send a second sensing signal based on the two-dimensional antenna array element layout to sense the environment. The first sensing signal is an echo signal of the second sensing signal. In this way, no additional transmitting measurement node needs to be provided, thereby reducing costs of a communication system.

S602: The measurement node sends the first antenna layout information to a processing node.

Optionally, when the plurality of array element arrangements are a plurality of rectangular array element arrangements, the shape information of the two-dimensional antenna array element layout may include a first value, a first spacing, and a second spacing.

Optionally, when the plurality of array element arrangements are a plurality of elliptical array element arrangements, the shape information of the two-dimensional antenna array element layout may include a second value and a third value.

S603: The processing node processes sensing data based on the first antenna layout information.

Optionally, before step S603, the method 600 further includes: The processing node receives the sensing data sent by the measurement node.

For example, in step S603, the processing node processes the sensing data based on the first antenna layout information, to obtain the sensing result.

Optionally, the sensing result may include a single result or a plurality of results including ranging, angle measurement, velocity measurement, or frequency measurement (Doppler) imaging.

In an embodiment, the processing node may receive a plurality of pieces of first antenna layout information sent by a plurality of measurement nodes, and process the sensing data based on the plurality of pieces of first antenna layout information. In this way, the method 600 can be applied to different communication scenarios, so that the method 600 has good generalization.

For example, two pieces of first antenna layout information may respectively come from two measurement nodes. Further, optionally, one of the two measurement nodes is a transmitting measurement node, and the other is a receiving measurement node.

In this embodiment of this application, the measurement node may send the first antenna layout information, so that the processing node obtains the sensing result based on the first antenna layout information. In this way, the measurement node does not need to send position coordinates of each array element in the two-dimensional antenna array element layout, so that an amount of data transmitted by the measurement node can be reduced, thereby reducing over-the-air transmission overheads.

The following describes a communication system provided in an embodiment of this application. The communication system may be applied to the application scenario shown in FIG. 5.

The communication system includes a receiving measurement node, a transmitting measurement node, and a processing node. The receiving measurement node is configured to send first antenna layout information and sensing data to the processing node. The sensing data is obtained by the receiving measurement node based on a second sensing signal sent by the transmitting measurement node. The first antenna layout information includes first position coordinate information and first shape information. The first position coordinate information indicates position coordinates of a plurality of array elements in a one-dimensional antenna array element layout, and the first shape information indicates array element positions in a two-dimensional antenna array element layout. The transmitting measurement node is configured to send second antenna layout information to the processing node. The second antenna layout information includes second position coordinate information and second shape information. The second position coordinate information indicates position coordinates of a plurality of array elements in a one-dimensional antenna array element layout, and the second shape information indicates array element positions in a two-dimensional antenna array element layout. The processing node is configured to process the sensing data based on the first antenna layout information and the second antenna layout information.

Optionally, the plurality of position coordinates in the one-dimensional antenna array element layout in the first position coordinate information may be the same as or different from the plurality of position coordinates in the one-dimensional antenna array element layout in the second position coordinate information. Similarly, the array element positions in the two-dimensional antenna layout indicated by the first shape information may be the same as or different from the array element positions in the two-dimensional antenna layout indicated by the second shape information.

Optionally, the second antenna layout information may be one of the plurality of pieces of first antenna layout information in the method 600.

In an embodiment of this application, when the measurement node is a bistatic measurement node, the processing node may process the sensing data based on the first antenna layout information sent by the receiving measurement node and the second antenna layout information sent by the transmitting measurement node to obtain a sensing result. In this manner, the amount of data transmitted by the receiving measurement node and the transmitting measurement node can be reduced, thereby reducing the over-the-air transmission overheads.

In an embodiment, the two-dimensional antenna array element layout includes a plurality of array element arrangements having a same shape. Regions enclosed by the plurality of array element arrangements have a same center point, and a ratio between areas of the regions enclosed by the plurality of array element arrangements is equal to a square of a ratio between the position coordinates of the plurality of array elements. In this way, the receiving measurement node and the transmitting measurement node can map the one-dimensional antenna array element layout to the two-dimensional antenna array element layout in a convenient and rapid manner.

In an embodiment, the plurality of array element arrangements are a plurality of rectangular array element arrangements. The first shape information includes a first value, a first spacing, and a second spacing. The first value is a side length ratio of a rectangle enclosed by each of the plurality of rectangular array element arrangements. The first spacing is a horizontal array element spacing in each rectangular array element arrangement. The second spacing is a vertical array element spacing in each rectangular array element arrangement.

For example, the first shape information and the second shape information may include Δ*ₓ*, Δ*_{y}*, and k. In other words, the two-dimensional antenna array element layout corresponding to the transmitting measurement node is the same as the two-dimensional antenna array element layout corresponding to the receiving measurement node.

For example, the first shape information includes Δ_{*x*1}, Δ_{*y*1}, and k₁, and the second shape information includes Δ_{*x*2}, Δ_{*y*2}, and k₂. In other words, the two-dimensional antenna array element layout corresponding to the transmitting measurement node is different from the two-dimensional antenna array element layout corresponding to the receiving measurement node.

In this embodiment of this application, when the plurality of array element arrangements are a plurality of rectangular array element arrangements, the first antenna layout information received by the processing node may include the position coordinates of the plurality of array elements in the one-dimensional antenna array element layout, the first value, the first spacing, and the second spacing. In this manner, the processing node does not need to receive position coordinates of each array element in the two-dimensional antenna array element layout, and the processing node can reconstruct the position coordinates of each array element in the second antenna array element layout corresponding to the receiving measurement node based on the above parameters in the first antenna layout information. In this way, the amount of data transmitted by the receiving measurement node is relatively small, thereby reducing the over-the-air transmission overheads.

In an embodiment, the plurality of array element arrangements are a plurality of elliptical array element arrangements, and the shape information includes a second value and a third value. The second value is a ratio of a major axis to a minor axis of an ellipse enclosed by each of the plurality of elliptical array element arrangements, and the third value is an angular spacing between array elements in each elliptical array element arrangement relative to the center point.

For example, the first shape information and the second shape information may include $\sqrt{1 - {e}^{2}}$ and Δ*_{θ}*. In other words, the two-dimensional antenna array element layout corresponding to the transmitting measurement node is the same as the two-dimensional antenna array element layout corresponding to the receiving measurement node.

For example, the first shape information includes $\sqrt{1 - {e}_{1}^{2}}$ and Δ_{*θ*1}, and the second shape information includes $\sqrt{1 - {e}_{2}^{2}}$ and Δ_{*θ*2}. In other words, the two-dimensional antenna array element layout corresponding to the transmitting measurement node is different from the two-dimensional antenna array element layout corresponding to the receiving measurement node.

In this embodiment of this application, when the plurality of array element arrangements are a plurality of elliptical array element arrangements, the first antenna layout information received by the processing node may include the position coordinates of the plurality of array elements in the one-dimensional antenna array element layout, the second value, and the third value. In this manner, the processing node can reconstruct the position coordinates of each array element in the second antenna array element layout corresponding to the receiving measurement node based on the above parameters in the first antenna layout information. In this way, the amount of data transmitted by the measurement node is relatively small, thereby reducing the over-the-air transmission overheads.

In an embodiment, the transmitting measurement node is further configured to send the second sensing signal based on the two-dimensional antenna array element layout. The receiving measurement node is further configured to receive a first sensing signal based on the two-dimensional antenna array element layout, where the first sensing signal is an echo signal corresponding to the second sensing signal. The receiving measurement node is further configured to determine the sensing data based on the first sensing signal.

In this embodiment of this application, the transmitting measurement node may send the second sensing signal based on the two-dimensional antenna array element layout, and the receiving measurement node may receive the first sensing signal based on the two-dimensional antenna array element layout and determine the sensing data. In this manner, the receiving measurement node and the transmitting measurement node do not need to use a dense antenna array for sensing and interaction, thereby effectively saving antenna resources used for sensing.

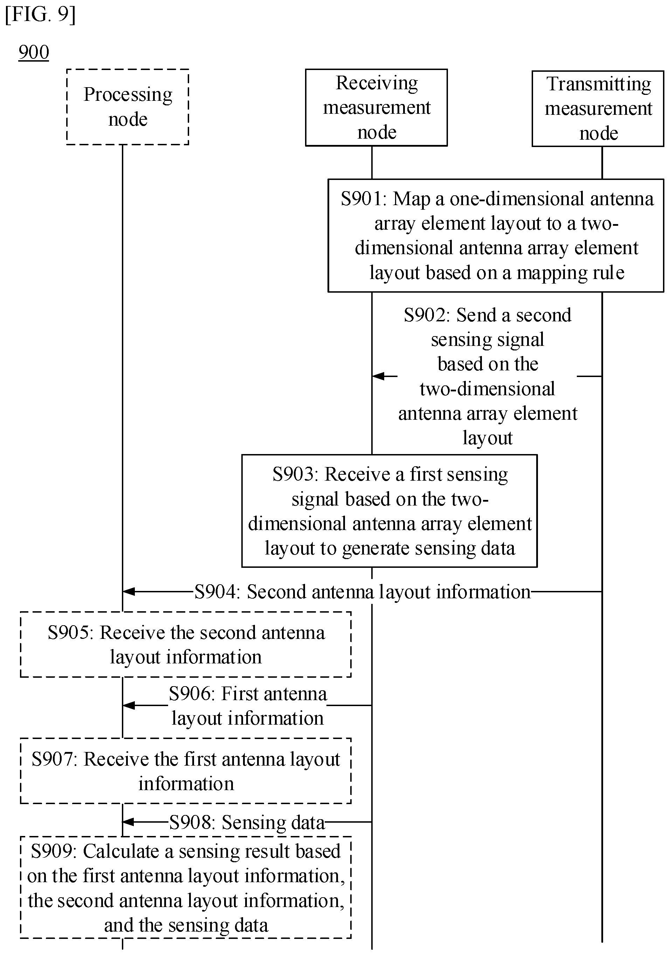

FIG. 9 is another communication method according to an embodiment of this application. A method 900 may be applied to the scenario shown in FIG. 4. The method 900 may specifically describe steps S601 to S603 in the method 600, or may specifically describe steps performed by execution bodies in the communication system. The method 900 may include steps S901 to S909.

S901: A transmitting measurement node and a receiving measurement node map a one-dimensional antenna array element layout to a two-dimensional antenna array element layout based on a mapping rule.

The transmitting measurement node and the receiving measurement node may be arranged in a bistatic configuration. In other words, the transmitting measurement node and the receiving measurement node are separately located and are not a same measurement node.

Specifically, the transmitting measurement node and the receiving measurement node may select a suitable one-dimensional antenna array element layout (for example, the one-dimensional antenna array element layout shown in FIG. 7A or FIG. 8A) based on a measurement scenario and a requirement for sparsity, and map a one-dimensional sparse antenna layout to a two-dimensional sparse antenna layout based on the mapping rule. The mapping rule may be a rectangular or elliptical mapping rule as described in FIGS. 7A-7C or FIG. 8A and FIG. 8B and a text part corresponding to FIGS. 7A-7C or FIG. 8A and FIG. 8B.

S902: The transmitting measurement node sends a second sensing signal based on the two-dimensional antenna array element layout.

The second sensing signal may be used to sense an environment.

S903: The receiving measurement node receives a first sensing signal based on the two-dimensional antenna array element layout, to generate sensing data.

The first sensing signal may be an echo signal corresponding to the second sensing signal.

S904: The transmitting measurement node sends second antenna layout information to a processing node.

For example, the second antenna layout information may be associated with the transmitting measurement node. The second antenna layout information may include Pₓ(i), Δ*ₓ*, Δ_{*y*,} and k described in the method 600, or the second antenna layout information may include Pₓ(i), Δ*_{θ}*, and e described in the method 600.

Optionally, the second antenna layout information may be one of the plurality of pieces of first antenna layout information in the method 600.

S905: The processing node receives the second antenna layout information.

S906: The receiving measurement node sends first antenna layout information to the processing node.

For example, the first antenna layout information may be associated with the receiving measurement node. The first antenna layout information may include Pₓ(i), Δ*ₓ*, Δ*_{y}*, and k described in the method 600, or the first antenna layout information may include Pₓ(i), Δ*_{θ}*, and e described in the method 600.

Optionally, although the first antenna layout information and the second antenna layout information may include a same parameter, a specific value of the parameter may be different.

S907: The processing node receives the first antenna layout information.

S908: The receiving measurement node sends the sensing data to the processing node.

S909: The processing node calculates a sensing result based on the first antenna layout information, the second antenna layout information, and the sensing data.

For example, a process of processing the sensing data by using a standard back-projection algorithm is as follows: First, matched filtering is performed by using transmitted signal data and the sensing data to obtain multi-channel sensing data after matched filtering, and each pair of transmitting and receiving antennas forms one channel. Then, a delay τ from an imaging point (*x, y, z*) to any pair of transmitting and receiving antennas is calculated, that is: $τ = \frac{\sqrt{{\left({x}_{T}-x\right)}^{2} + {\left({y}_{T}-y\right)}^{2} + {\left({z}_{T}-z\right)}^{2}} + \sqrt{{\left({x}_{R}-x\right)}^{2} + {\left({y}_{R}-y\right)}^{2} + {\left({z}_{R}-z\right)}^{2}}}{c}$

In the foregoing formula, (*x_{T}*, *y_{T}*, *z_{T}*) and (*x_{R}*, *y_{R}*, *z_{R}*) are respectively coordinates of a transmitting antenna and coordinates of a receiving antenna, and c is a speed of light.

Finally, a phase compensation factor exp (*j*2*πfτ*) generated from the delay is multiplied by the multi-channel sensing data after matched filtering, and coherent accumulation is performed to obtain the sensing result. j is an imaginary unit, and f is an operating frequency of a communication system. Calculation accuracy for the delay τ may be Δτ ≤ 8/*f*. In consideration that the operating frequency *f* of the communication system is usually greater than 1 GHz, that is, Δτ ≤ 8 nanoseconds, a calculation requirement for the delay *τ* is very high, so that precise coordinates of transmitting and receiving antennas are required. Therefore, the processing node needs to obtain accurate first antenna layout information and second antenna layout information.

Optionally, the processing node processes the sensing data based on a correspondence between the sensing data and the first antenna layout information and the second antenna layout information, to obtain the sensing result.

Alternatively, the communication system may not include the processing node, and the receiving measurement node replaces the processing node to perform a function of the processing node. In other words, in the method 900, steps S904 to S909 may not be performed, and after generating the sensing data, the receiving measurement node may directly calculate the sensing result based on the sensing data.

It should be understood that the processing node needs to receive the first antenna layout information and the second antenna layout information, to implement coherent signal processing. In addition, in the context of integrated sensing and communication, an antenna port is used not only for communication but also for sensing. The antenna port used for sensing does not necessarily send a reference signal (for example, channel state information reference signal (CSI-RS)). If a receiving end (for example, the processing node in method 900) uses the CSI-RS as a reference signal for measurement, an incorrect channel measurement value may be caused. This leads to precoding failure and thus affects a communication function. Therefore, the processing node also needs to receive the first antenna layout information or the second antenna layout information to avoid the case described above.

In this embodiment of this application, in a bistatic sensing scenario, the transmitting measurement node may send the second sensing signal based on the two-dimensional antenna array element layout. Correspondingly, the receiving measurement node may receive the first sensing signal based on the two-dimensional antenna array element layout and generate the sensing data. Because the two-dimensional antenna array element layout is determined based on position coordinates of a plurality of array elements in the one-dimensional array element layout, the measurement node does not need to use a dense antenna array to receive the sensing signal, thereby effectively saving antenna resources used for sensing and reducing over-the-air transmission overheads.

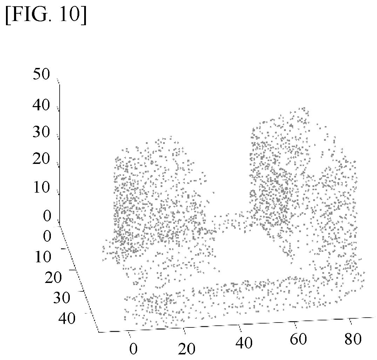

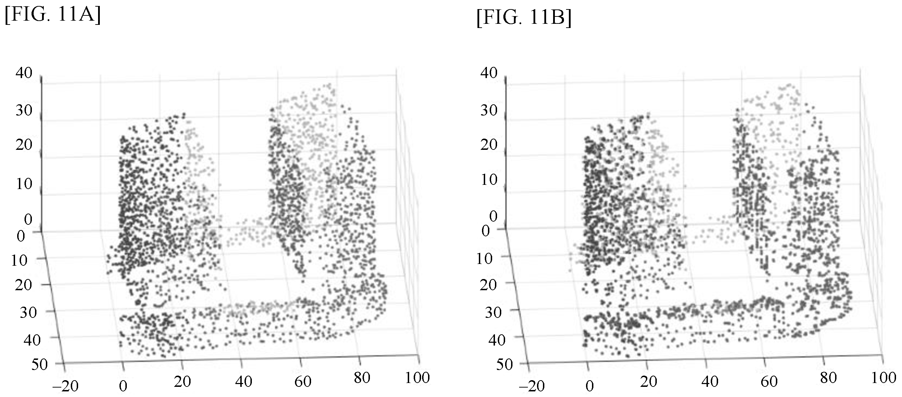

With reference to FIG. 10, FIG. 11A, and FIG. 11B, the following specifically describes technical effects achieved by the method 900.

As shown in FIG. 10, two measurement nodes respectively perform sensing measurement on two buildings formed by discrete points in a region, and send sensing data to the processing node. Then, the processing node may separately obtain measurement results shown in FIG. 11A and FIG. 11B. Each of the two measurement nodes has a uniformly arranged two-dimensional dense antenna layout (with a spacing between array elements being half of a wavelength and a quantity of array elements being 1024) and a two-dimensional antenna array element layout (which may also be referred to as a sparse array element layout, with 256 array elements) obtained by using the method 900. FIG. 11A is a sensing result obtained by the processing node based on the two-dimensional dense antenna layout, and FIG. 11B is a sensing result obtained by the processing node based on the two-dimensional antenna array element layout in method 900.

With reference to data in FIG. 11A, FIG. 11B, and Table 1, it can be learned that the two-dimensional antenna array element layout obtained by using the method 900 has similar sensing performance (with similar values of reconstruction precision, reconstruction completeness, reconstruction dispersion, and recovery probability) to the two-dimensional dense antenna layout.

**Table 1**

| Antenna layout | Reconstruction precision | Reconstruction completeness | Reconstruction dispersion | Recovery probability |
|---|---|---|---|---|
| 1024 dense array | 1.1093 | 0.5216 | 1.3110 | 0.9756 |
| elements | | | | |
| 256 sparse array elements | 1.2093 | 0.4405 | 1.5565 | 0.9762 |

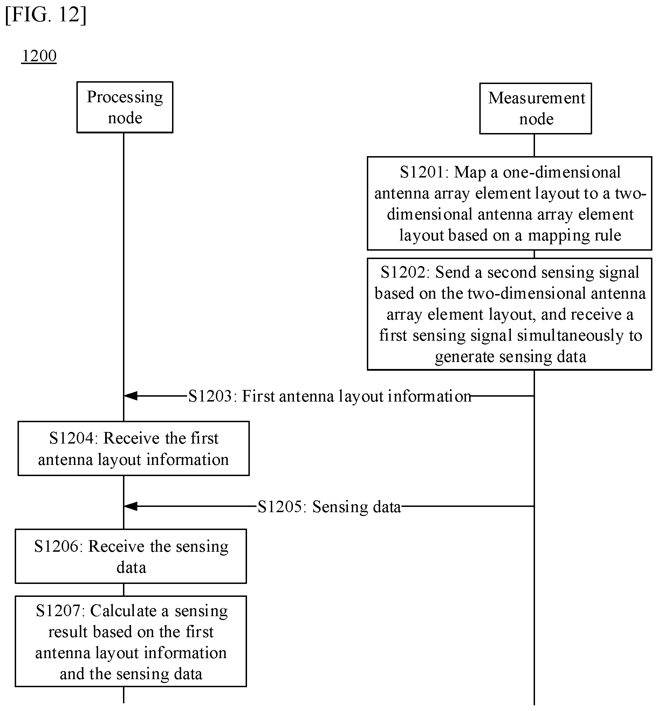

FIG. 12 is another communication method according to an embodiment of this application. A method 1200 may be applied to the scenario shown in FIG. 5. The method 1200 may specifically describe steps S601 to S603 in the method 600. The method 1200 may include steps S1201 to S1207.

S1201: A measurement node maps a one-dimensional antenna array element layout to a two-dimensional antenna array element layout based on a mapping rule.

The measurement node may be arranged in a monostatic configuration. In other words, the transmitting measurement node and the receiving measurement node are co-located and are a same measurement node.

Specifically, the measurement node may select a suitable one-dimensional antenna array element layout (for example, the one-dimensional antenna array element layout shown in FIG. 7A or FIG. 8A) based on a measurement scenario and a requirement for sparsity, and map a one-dimensional sparse antenna layout to a two-dimensional sparse antenna layout based on the mapping rule. The mapping rule may be a rectangular or elliptical mapping rule as described in FIGS. 7A-7C or FIG. 8A and FIG. 8B and a text part corresponding to FIGS. 7A-7C or FIG. 8A and FIG. 8B.

S1202: The measurement node sends a second sensing signal based on the two-dimensional antenna array element layout, and receives a first sensing signal simultaneously to generate sensing data.

The second sensing signal may be used to sense an environment, and the first sensing signal may be an echo signal corresponding to the second sensing signal.

S1203: The measurement node sends first antenna layout information to a processing node.

The first antenna layout information may include Pₓ(i), Δ*ₓ*, Δ*_{y}* and k described in the method 600, or the first antenna layout information may include Pₓ(i), Δ_{*θ*,} and e described in the method 600.

S1204: The processing node receives the first antenna layout information.

S1205: The measurement node sends the sensing data to the processing node.

S1206: The processing node receives the sensing data.

S1207: The processing node may calculate a sensing result based on the first antenna layout information and the sensing data.

Optionally, the processing node processes echo data based on a correspondence between the first antenna layout information and the sensing data, to obtain the sensing result.

In this embodiment of this application, in a monostatic sensing scenario, the measurement node may send the second sensing signal based on the two-dimensional antenna array element layout and receive the first sensing signal to generate the sensing data. Because the two-dimensional antenna array element layout is determined based on position coordinates of a plurality of array elements in the one-dimensional array element layout, the measurement node does not need to use a dense antenna array to receive the sensing signal, thereby effectively saving antenna resources used for sensing and reducing over-the-air transmission overheads.

An embodiment of this application further provides an apparatus configured to implement any one of the foregoing methods. The apparatus includes a corresponding unit configured to implement steps in any one of the foregoing methods.

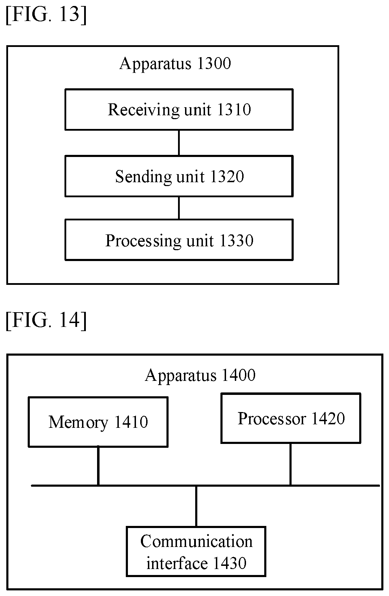

FIG. 13 is a diagram of a communication apparatus 1300 according to an embodiment of this application. The apparatus 1300 may include a receiving unit 1310, a sending unit 1320, and a processing unit 1330. The receiving unit 1310 is configured to receive instructions and/or data, and the sending unit 1320 is configured to send instructions and/or data. The receiving unit 1310 and the sending unit 1320 may also be referred to as a communication interface, a communication unit, or a transceiver unit. The processing unit 1330 is configured to perform data processing, to enable the apparatus 1300 to implement the foregoing communication method.

Optionally, the apparatus 1300 further includes a storage unit, configured to implement a corresponding storage function, and store corresponding instructions and/or data.

As a design, the apparatus 1300 may perform an action performed by the measurement node or the receiving measurement node in the foregoing method embodiments.

In an embodiment, the processing unit 1330 and the sending unit 1320 are provided. The processing unit 1330 is configured to determine first antenna layout information. The first antenna layout information includes position coordinates of a plurality of array elements in a one-dimensional antenna array element layout and shape information of a two-dimensional antenna array element layout. The shape information indicates array element positions in the two-dimensional antenna array element layout. The sending unit 1320 is configured to send the first antenna layout information.

In a possible implementation, the two-dimensional antenna array element layout includes a plurality of array element arrangements having a same shape. Regions enclosed by the plurality of array element arrangements have a same center point, and a ratio between areas of the regions enclosed by the plurality of array element arrangements is equal to a square of a ratio between the position coordinates of the plurality of array elements.

In a possible implementation, the plurality of array element arrangements are a plurality of rectangular array element arrangements. The shape information includes a first value, a first spacing, and a second spacing. The first value is a side length ratio of a rectangle enclosed by each of the plurality of rectangular array element arrangements. The first spacing is a horizontal array element spacing in each rectangular array element arrangement. The second spacing is a vertical array element spacing in each rectangular array element arrangement.

In a possible implementation, the plurality of array element arrangements are a plurality of elliptical array element arrangements, and the shape information includes a second value and a third value. The second value is a ratio of a major axis to a minor axis of an ellipse enclosed by each of the plurality of elliptical array element arrangements, and the third value is an angular spacing between array elements in each elliptical array element arrangement relative to the center point.

In a possible implementation, the apparatus further includes a receiving unit 1310. The receiving unit 1310 is configured to receive a first sensing signal based on the two-dimensional antenna array element layout. The two-dimensional antenna array element layout is determined based on the position coordinates of the plurality of array elements in the one-dimensional antenna array element layout. The sending unit 1320 is further configured to send sensing data based on the first sensing signal.

In a possible implementation, the sending unit 1320 is further configured to send a second sensing signal based on the two-dimensional antenna array element layout, where the first sensing signal is an echo signal corresponding to the second sensing signal.

As a design, the apparatus 1300 may perform an action performed by the processing node in the foregoing method embodiments.

In an embodiment, the apparatus 1300 includes a receiving unit 1310. The receiving unit is configured to receive one or more pieces of first antenna layout information. The one or more pieces of first antenna layout information include the position coordinates of the plurality of array elements in the one-dimensional antenna array element layout and the shape information of the two-dimensional antenna array element layout. The shape information indicates the array element positions in the two-dimensional antenna array element layout. The processing unit 1330 is configured to receive the sensing data, and process the sensing data based on the one or more pieces of first antenna layout information.

In a possible implementation, the two-dimensional antenna array element layout includes a plurality of array element arrangements having a same shape. Regions enclosed by the plurality of array element arrangements have a same center point, and a ratio between areas of the regions enclosed by the plurality of array element arrangements is equal to a square of a ratio between the position coordinates of the plurality of array elements.

In a possible implementation, the plurality of array element arrangements are a plurality of rectangular array element arrangements. The shape information includes a first value, a first spacing, and a second spacing. The first value is a side length ratio of a rectangle enclosed by each of the plurality of rectangular array element arrangements. The first spacing is a horizontal array element spacing in each rectangular array element arrangement. The second spacing is a vertical array element spacing in each rectangular array element arrangement.

In a possible implementation, the plurality of array element arrangements are a plurality of elliptical array element arrangements, and the shape information includes the second value and the third value. The second value is a ratio of a major axis to a minor axis of an ellipse enclosed by each of the plurality of elliptical array element arrangements, and the third value is an angular spacing between array elements in each elliptical array element arrangement relative to the center point.

FIG. 14 is a diagram of another communication apparatus 1400 according to an embodiment of this application.

The apparatus 1400 includes a memory 1410, a processor 1420, and a communication interface 1430. The memory 1410, the processor 1420, and the communication interface 1430 are connected to each other through an internal connection path. The memory 1410 is configured to store instructions. The processor 1420 is configured to execute the instructions stored in the memory 1410, to control the communication interface 1430 to obtain information, or to enable the apparatus 1400 to implement the foregoing communication method. Optionally, the memory 1410 may be coupled to the processor 1420 through an interface, or may be integrated with the processor 1420.

It should be noted that the communication interface 1430 uses a transceiver apparatus, for example, but not limited to, a transceiver. The communication interface 1430 may further include an input/output interface (input/output interface).

The processor 1420 stores one or more computer programs. The one or more computer programs include instructions. When the instructions are run by the processor 1420, the apparatus 1400 is enabled to perform the communication method in the foregoing embodiments.

In an implementation process, the steps in the foregoing method may be implemented by using a hardware integrated logical circuit in the processor 1420 or instructions in a form of software. The method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory 1410, and the processor 1420 reads information in the memory 1410 and completes the steps in the foregoing methods in combination with hardware of the processor. To avoid repetition, details are not described herein again.

Optionally, the communication interface 1430 in FIG. 14 may implement the receiving unit 1310 and the sending unit 1320 in FIG. 13, and the processor 1420 in FIG. 14 may implement the processing unit 1330 in FIG. 13.

An embodiment of this application further provides a computer-readable storage medium. The computer-readable storage medium stores program code. When the computer program code is run on a computer, the computer is enabled to perform any one of the methods in FIG. 6 to FIG. 12.

An embodiment of this application further provides a computer program product. The computer product includes a computer program. When the computer program is run, a computer is enabled to perform any one of the methods in FIG. 6 to FIG. 12.

An embodiment of this application further provides a chip, including a circuit. The circuit is configured to perform any one of the methods in FIG. 6 to FIG. 12.

A person of ordinary skill in the art may be aware that the units and the algorithm steps in the examples described with reference to embodiments disclosed in this specification can be implemented by using electronic hardware or a combination of computer software and electronic hardware. Whether these functions are performed by hardware or software depends on specific applications and design constraints of the technical solutions. A person skilled in the art may use different methods to implement the described functions for each specific application, but it should not be considered that such an implementation goes beyond the scope of this application.

A person skilled in the art may clearly understand that, for the purpose of convenient and brief description, for specific working processes of the system, apparatus, and unit described above, refer to the corresponding processes in the foregoing method embodiments. Details are not described herein again.

In several embodiments provided in this application, it should be understood that the disclosed system, apparatus, and method may be implemented in another manner. For example, the apparatus embodiments described above are merely examples. For example, the unit division is merely logical function division, and there may be another division manner in actual implementation. For example, a plurality of units or components may be combined or integrated into another system, or some features may be ignored or not performed. In addition, the displayed or discussed mutual couplings, direct couplings, or communication connections may be implemented by using some interfaces. The indirect couplings or communication connections between the apparatuses or units may be implemented in an electrical form, a mechanical form, or another form.

The units described as separate components may or may not be physically separated, and components displayed as units may or may not be physical units, in other words, may be located in one place, or may be distributed on a plurality of network units. Some or all of the units may be selected based on actual requirements to achieve the objectives of the solutions in embodiments.

In addition, functional units in embodiments of this application may be integrated into one processing unit, or each of the units may exist alone physically, or two or more units may be integrated into one unit.

When the function is implemented in a form of a software functional unit and sold or used as an independent product, the function may be stored in a computer-readable storage medium. Based on such an understanding, the technical solutions of this application essentially, or the part contributing to the current technology, or some of the technical solutions may be embodied in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any person skilled in the art can readily figure out variations or replacements within the technical scope disclosed in this application, and these variations or replacements shall fall within the protection scope of this application. Therefore, the protection scope of this application shall be subject to the protection scope of the claims.

## Claims

1. A communication method, wherein the method is performed by a measurement node, and the method comprises:
determining first antenna layout information, wherein the first antenna layout information comprises position coordinates of a plurality of array elements in a one-dimensional antenna array element layout and shape information of a two-dimensional antenna array element layout,
and the shape information indicates array element positions in the two-dimensional antenna array element layout; and
sending the first antenna layout information.

2. The method according to claim 1, wherein the two-dimensional antenna array element layout comprises a plurality of array element arrangements having a same shape, regions enclosed by the plurality of array element arrangements have a same center point, and a ratio between areas of the regions enclosed by the plurality of array element arrangements is equal to a square of a ratio between the position coordinates of the plurality of array elements.

3. The method according to claim 2, wherein the plurality of array element arrangements are a plurality of rectangular array element arrangements, the shape information comprises a first value, a first spacing, and a second spacing, the first value is a side length ratio of a rectangle enclosed by each of the plurality of rectangular array element arrangements, the first spacing is a horizontal array element spacing in each rectangular array element arrangement, and the second spacing is a vertical array element spacing in each rectangular array element arrangement.

4. The method according to claim 2, wherein the plurality of array element arrangements are a plurality of elliptical array element arrangements, the shape information comprises a second value and a third value, the second value is a ratio of a major axis to a minor axis of an ellipse enclosed by each of the plurality of elliptical array element arrangements, and the third value is an angular spacing between array elements in each elliptical array element arrangement relative to the center point.

5. The method according to any one of claims 1 to 4, wherein the method further comprises:
receiving a first sensing signal based on the two-dimensional antenna array element layout,
wherein the two-dimensional antenna array element layout is determined based on the position coordinates of the plurality of array elements in the one-dimensional antenna array element layout; and
sending sensing data based on the first sensing signal.

6. The method according to claim 5, wherein before receiving the first sensing signal based on the two-dimensional antenna array element layout, the method further comprises:
sending a second sensing signal based on the two-dimensional antenna array element layout,
wherein the first sensing signal is an echo signal corresponding to the second sensing signal.

7. A communication method, wherein the method is performed by a processing node, and the method comprises:
receiving one or more pieces of first antenna layout information, wherein the one or more pieces of first antenna layout information comprise: position coordinates of a plurality of array elements in a one-dimensional antenna array element layout and shape information of a two-dimensional antenna array element layout, and the shape information indicates array element positions in the two-dimensional antenna array element layout; and
receiving sensing data, and processing the sensing data based on the one or more pieces of first antenna layout information.

8. The method according to claim 7, wherein the two-dimensional antenna array element layout comprises a plurality of array element arrangements having a same shape, regions enclosed by the plurality of array element arrangements have a same center point, and a ratio between areas of the regions enclosed by the plurality of array element arrangements is equal to a square of a ratio between the position coordinates of the plurality of array elements.

9. The method according to claim 8, wherein the plurality of array element arrangements are a plurality of rectangular array element arrangements, the shape information comprises a first value, a first spacing, and a second spacing, the first value is a side length ratio of a rectangle enclosed by each of the plurality of rectangular array element arrangements, the first spacing is a horizontal array element spacing in each rectangular array element arrangement, and the second spacing is a vertical array element spacing in each rectangular array element arrangement.

10. The method according to claim 8, wherein the plurality of array element arrangements are a plurality of elliptical array element arrangements, the shape information comprises a second value and a third value, the second value is a ratio of a major axis to a minor axis of an ellipse enclosed by each of the plurality of elliptical array element arrangements, and the third value is an angular spacing between array elements in each elliptical array element arrangement relative to the center point.

11. A communication system, wherein the system comprises a receiving measurement node, a transmitting measurement node, and a processing node;
the receiving measurement node is configured to send first antenna layout information and sensing data to the processing node, wherein the sensing data is obtained by the receiving measurement node based on a second sensing signal sent by the transmitting measurement node, the first antenna layout information comprises first position coordinate information and first shape information, the first position coordinate information indicates position coordinates of a plurality of array elements in a one-dimensional antenna array element layout, and the first shape information indicates array element positions in a two-dimensional antenna array element layout;
the transmitting measurement node is configured to send second antenna layout information to the processing node, wherein the second antenna layout information comprises second position coordinate information and second shape information, the second position coordinate information indicates position coordinates of a plurality of array elements in a one-dimensional antenna array element layout, and the second shape information indicates array element positions in a two-dimensional antenna array element layout; and
the processing node is configured to process the sensing data based on the first antenna layout information and the second antenna layout information.

12. The system according to claim 11, wherein the two-dimensional antenna array element layout comprises a plurality of array element arrangements having a same shape, regions enclosed by the plurality of array element arrangements have a same center point, and a ratio between areas of the regions enclosed by the plurality of array element arrangements is equal to a square of a ratio between the position coordinates of the plurality of array elements.

13. The system according to claim 12, wherein the plurality of array element arrangements are a plurality of rectangular array element arrangements, the first shape information comprises a first value, a first spacing, and a second spacing, the first value is a side length ratio of a rectangle enclosed by each of the plurality of rectangular array element arrangements, the first spacing is a horizontal array element spacing in each rectangular array element arrangement, and the second spacing is a vertical array element spacing in each rectangular array element arrangement.

14. The system according to claim 12, wherein the plurality of array element arrangements are a plurality of elliptical array element arrangements, the first shape information comprises a second value and a third value, the second value is a ratio of a major axis to a minor axis of an ellipse enclosed by each of the plurality of elliptical array element arrangements, and the third value is an angular spacing between array elements in each elliptical array element arrangement relative to the center point.

15. The system according to any one of claims 11 to 14, wherein
the transmitting measurement node is further configured to send the second sensing signal based on the two-dimensional antenna array element layout;
the receiving measurement node is further configured to receive a first sensing signal based on the two-dimensional antenna array element layout, wherein the first sensing signal is an echo signal corresponding to the second sensing signal; and
the receiving measurement node is further configured to determine the sensing data based on the first sensing signal.

16. A communication apparatus, wherein the apparatus comprises a processing unit and a sending unit;
the processing unit is configured to determine first antenna layout information, wherein the first antenna layout information comprises position coordinates of a plurality of array elements in a one-dimensional antenna array element layout and shape information of a two-dimensional antenna array element layout, and the shape information indicates array element positions in the two-dimensional antenna array element layout; and
the sending unit is configured to send the first antenna layout information.

17. The apparatus according to claim 16, wherein the two-dimensional antenna array element layout comprises a plurality of array element arrangements having a same shape, regions enclosed by the plurality of array element arrangements have a same center point, and a ratio between areas of the regions enclosed by the plurality of array element arrangements is equal to a square of a ratio between the position coordinates of the plurality of array elements.

18. The apparatus according to claim 17, wherein the plurality of array element arrangements are a plurality of rectangular array element arrangements, the shape information comprises a first value, a first spacing, and a second spacing, the first value is a side length ratio of a rectangle enclosed by each of the plurality of rectangular array element arrangements, the first spacing is a horizontal array element spacing in each rectangular array element arrangement, and the second spacing is a vertical array element spacing in each rectangular array element arrangement.

19. The apparatus according to claim 17, wherein the plurality of array element arrangements are a plurality of elliptical array element arrangements, the shape information comprises a second value and a third value, the second value is a ratio of a major axis to a minor axis of an ellipse enclosed by each of the plurality of elliptical array element arrangements, and the third value is an angular spacing between array elements in each elliptical array element arrangement relative to the center point.

20. The apparatus according to any one of claims 16 to 19, wherein the apparatus further comprises a receiving unit, wherein
the receiving unit is configured to receive a first sensing signal based on the two-dimensional antenna array element layout, wherein the two-dimensional antenna array element layout is determined based on the position coordinates of the plurality of array elements in the one-dimensional antenna array element layout; and
the sending unit is further configured to send sensing data based on the first sensing signal.

21. The apparatus according to claim 20, wherein
the sending unit is further configured to send a second sensing signal based on the two-dimensional antenna array element layout, wherein the first sensing signal is an echo signal corresponding to the second sensing signal.

22. A communication apparatus, wherein the apparatus comprises a receiving unit and a processing unit;
the receiving unit is configured to receive one or more pieces of first antenna layout information, wherein the one or more pieces of first antenna layout information comprise position coordinates of a plurality of array elements in a one-dimensional antenna array element layout and shape information of a two-dimensional antenna array element layout, and the shape information indicates array element positions in the two-dimensional antenna array element layout; and
the processing unit is configured to receive sensing data, and process the sensing data based on the one or more pieces of first antenna layout information.

23. The apparatus according to claim 22, wherein the two-dimensional antenna array element layout comprises a plurality of array element arrangements having a same shape, regions enclosed by the plurality of array element arrangements have a same center point, and a ratio between areas of the regions enclosed by the plurality of array element arrangements is equal to a square of a ratio between the position coordinates of the plurality of array elements.

24. The apparatus according to claim 23, wherein the plurality of array element arrangements are a plurality of rectangular array element arrangements, the shape information comprises a first value, a first spacing, and a second spacing, the first value is a side length ratio of a rectangle enclosed by each of the plurality of rectangular array element arrangements, the first spacing is a horizontal array element spacing in each rectangular array element arrangement, and the second spacing is a vertical array element spacing in each rectangular array element arrangement.

25. The apparatus according to claim 23, wherein the plurality of array element arrangements are a plurality of elliptical array element arrangements, the shape information comprises a second value and a third value, the second value is a ratio of a major axis to a minor axis of an ellipse enclosed by each of the plurality of elliptical array element arrangements, and the third value is an angular spacing between array elements in each elliptical array element arrangement relative to the center point.

26. A communication apparatus, comprising a processor and a memory, wherein the processor is coupled to the memory, and is configured to read and execute instructions in the memory, to perform the method according to any one of claims 1 to 10.

27. A computer-readable storage medium, wherein the computer-readable storage medium stores program code, and when the computer program code is run on a computer, the computer is enabled to perform the method according to any one of claims 1 to 10.

28. A chip, comprising a circuit, wherein the circuit is configured to perform the method according to any one of claims 1 to 10.
